(19) Europäisches Patentamt
European Patent Office
Office européen des brevets

(11) Publication number: **0 568 194 A1**

(12) **EUROPEAN PATENT APPLICATION**

(21) Application number: **93302451.5**

(51) Int. Cl.[5]: **G01N 21/35**

(22) Date of filing: **30.03.93**

(30) Priority: **27.04.92 JP 134134/92**

(43) Date of publication of application:
**03.11.93 Bulletin 93/44**

(84) Designated Contracting States:
**DE FR GB**

(71) Applicant: **SHIN-ETSU HANDOTAI COMPANY LIMITED**
**4-2, Marunouchi 1-Chome**
**Chiyoda-ku Tokyo(JP)**

(72) Inventor: **Kitagawara, Yutaka**
**Fujitsuka-machi 139-7**
**Takasaki-shi, Gunma-ken(JP)**
Inventor: **Takamizawa, Kazuhisa**
**Aza Ohira 150-5,**
**Oaza Odakura,**
**Nishigo-mura**
**Nishishirakawa-gun, Fukushima-ken(JP)**
Inventor: **Takenaka, Takao**
**Haraichi 1673-1**
**Annaka-shi, Gunma-ken(JP)**

(74) Representative: **Murgitroyd, Ian G. et al**
**Murgitroyd and Company**
**373 Scotland Street**
**Glasgow G5 8OA (GB)**

(54) **Method for determination of interstitial oxygen concentration by infrared absorption.**

(57) The determination of an interstitial oxygen concentration in a silicon single crystal having a carrier concentration of 1.3 x $10^{15}$ $cm^{-3}$ or more by means of the absorption in the 1106 $cm^{-1}$ infrared local vibration mode of the interstitial oxygen present in the silicon single crystal, which method is characterized by passing an infrared radiation through a polarizer thereby depriving infrared incident rays formed exclusively of a polarized parallel light component and projecting the infrared incident light on the sample crystal at the Brewster angle as the angle of incidence relative to the surface of the sample crystal thereby enabling the measurement of the interstitial oxygen concentration in the silicon crystal to be carried out under the conditions incapable of inducing multiple reflection of the infrared rays within the sample (PPBIR).

FIG. 1

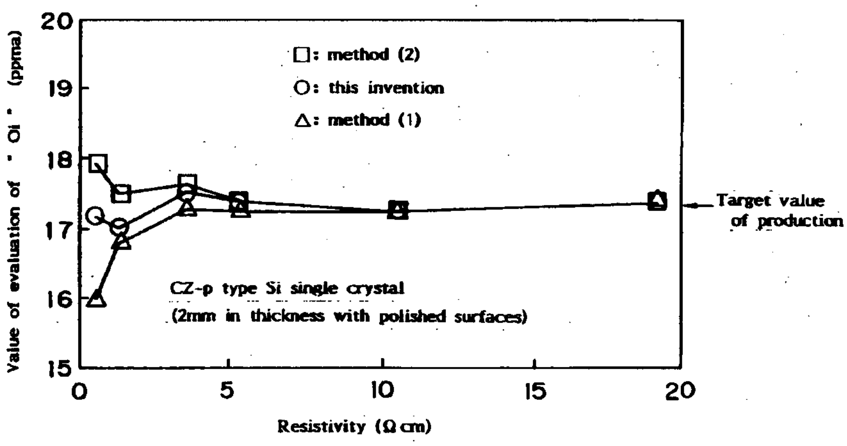


EP 0 568 194 A1

## BACKGROUND OF THE INVENTION

### Field of the invention:

The invention relates to a method for the determination of an interstitial oxygen concentration by the technique of infrared absorption. More particularly, this invention relates to a method for the determination of an interstitial oxygen concentration in a silicon single crystal of a low resistivity by means of the absorption of the interstitial oxygen in the infrared local vibration mode.

### Description of the Prior Art:

Herefore, the Czochralski method has been adopted for pulling a silicon single crystal. It has been known that since a crucible made of quartz is used as the vessel for accommodating a molten mass of silicon, the oxygen contained in the wall of the quartz crucible melts away and passes into the molten silicon mass and eventually shuts itself in the silicon single crystal. The oxygen thus occluded in the silicon single crystal at times forms the cause for a defect and at other times manifests the gettering effect. Thus, the desirability of developing a technique for accurately determining the oxygen concentration in a silicon single crystal has been finding growing recognition.

For the purpose of finding the interstitial oxygen concentration ("Oi") in a silicon single crystal from the peak height of the local vibration absorption of the interstitial oxygen (Oi) at 1106 $cm^{-1}$ at room temperature by the technique of infrared absorption, it is necessary to determine accurately the light absorption coefficient and further determine the concentration "Oi" by means of a concentration conversion factor. Since the silicon single crystal has a high reflectance, R = 0.30, the light which has entered into the sample crystal induces the phenomenon of multiple reflection, namely the repetition of reflection between the obverse surface and the reverse surface of the sample. Owing to the effect of this multiple reflection, the determination of the true light absorption coefficient by the Oi absorption generally is not simple but demands much attention [refer, forexample, to T. Iizuka et al., J. Electrochem. Soc., 132, 1707 (1985)].

Heretofore, the following two methods have been frequently adopted as ordinary means for determining the concentration "Oi."

Method (1): "Multiple reflection correcting method intended to find true light absorption coefficient by mathematically correcting the effect of multiple reflection"

Heretofore, concerning the determination of the "Oi" based on the multiple reflection correction, the standardized method [T. Iizuka et al., J. Electrochem. Soc., 132, 1707 (1985)] proposed by Japan Electronic Industry Development Association (JEIDA) has been widely known. According to this method, the net infrared radiation transmittance, T, to be determined by the local vibration of the Oi is expressed by the following formula 1.

$$T = f(R,\ d,\ \alpha_1,\ \alpha_0)\ e^{-\alpha_0 d} \qquad (1)$$

In the formula, the term f(R, d, $\alpha_1$, $\alpha_0$), is expressed by the following formula 2.

$$f(R,\ d,\ \alpha_1,\ \alpha_0) = \frac{1 - R^2 e^{-2\alpha_1 d}}{1 - R^2 e^{-2(\alpha_1 + \alpha_0) d}} \qquad (2)$$

In the formula 2 given above, R stands for the reflectance on the Si surface, i.e. R = 0.30, d for the thickness of a sample crystal containing oxygen and of a reference crystal having an oxygen concentration not exeeding the lower limit of detection, $\alpha_1$ for the light absorption coefficient based on the vibration of a Si crystal lattice, i.e. $\alpha_1$ = 0.85 $cm^{-1}$ , and $\alpha_0$ for the light absorption coefficient based on the local vibration of the intertitial oxygen atom.

In the formula 1 and the formula 2 mentioned above, since R and $\alpha_1$ are constants, the light absorption coefficient $\alpha_0$ of Oi can be uniquely fixed by actually measuring the thickness d of the sample crystal and the net transmittance T based on Oi. Once the value of the coefficient $\alpha_0$ is fixed, the interstitial oxygen concentration [Oi] is found in accordance with the Beer's law shown by the formula 3.

$$[Oi] = k\alpha_0 \qquad (3)$$

In the formula, k stands for the concentration conversion factor. By JEIDA standard, k is defined as $k = 3.03 \times 10^{17} cm^{-2}$.

The measurement of the net transmittance T is carried out as follows. First, the relative transmittance spectrum, namely, the spectrum of the value $T_{sample}/T_{reference}$ which is obtained by dividing the transmittance $T_{sample}$ of the sample crystal containing oxygen by the transmittance $T_{reference}$ of the reference crystal. Fig. 4 shows the relative spectrum of the Oi absorption wavelength range. In the diagram, the ratio of the peak value $T_{peak}$ to the base value $T_{base}$, i.e. $T_{peak}/T_{base}$, at the Oi absorption designates the net transmittance T by the Oi local vibration (namely $T = T_{peak}/T_{base}$).

Since the reflectance R on the Si surface has a high value of 0.30 as described above and, therefore, since the effect of multiple reflection does not deserve to be ignored, the use of the formula 1 is necessary. The Lambert-Beer's law show by the following formula 4 holds good in the case where the multiple reflection is absent.

$$T = e^{-\alpha d} \qquad (4)$$

Thus, the function, $f(R,d, \alpha_1, \alpha_0)$ in the formula 1, is nothing else but the corrective function for the multiple reflection.

The correction of multiple reflection found in the monograph "T. Iizuka et al.,J. Electrochem. Soc.,132, 1702(1985)" cited above, however, pays no due respect to the effect of the light absorption coefficient , $\alpha_f$, based on the free carrier absorption (refer, for example, to "Formula 9" which will be discussed afterward). In other words, due attention should be paid to the fact that the correction function, $f(R,d, \alpha_1, \alpha_0)$, for the multiple reflection included in the formula 2 does not include the effect of $\alpha_f$. As described in the working examples to be cited hereinafter, the correction of the multiple reflection proposed by this monograph gives rise to a conspicuous error in the numerical value of evaluation of "Oi" of a low-resistivity sample having a carrier concentration of $2.7 \times 10^{15} cm^{-3}$ or more, though it raises no problem to the value of evaluation of "Oi" of a sample of a carrier concentration of less than $1.30 \times 10^{15} cm^{-3}$.

Meshod (2): "Method for causing the deviation from Lambert-Beer's law due to the effect of multiple reflection to be incorporated in the effective thickness of a sample and the effective concentration conversion coefficient"

As shown in Method (1), in the determination of "Oi" of the Si crystal, the net infrared transmittance T by the Oi local vibration due to the effect of multiple reflection, in view of the formula 1 and the formula 2, is expressed (in cases where the effect of $\alpha_f$ can be ignored) by the formula 1:

$$T = f(R, d, \alpha_1, \alpha_0)\, e^{-\alpha_0 d} \qquad (1)$$

This formula 1 is different from the Lambert-Beer's law expressed by the following formula 4 which holds good in the absence of multiple reflection,

$$T = e^{-\alpha d} \qquad (4)$$

it is based on the assumption that the approximation of the following formula 5 conforming to the Lambert-Beer'slaw with necessary modifications holds good.

$$T \fallingdotseq e^{-\alpha_{0,eff} d_{eff}} \qquad (5)$$

In this formula, $d_{eff}$ stands for the effective thickness of a sample. The effective thickness $d_{eff}$ is used in the place of the actual thickness d of the sample in the approximation of the formula 5 because the effective length of light path is increased owing to the multiple reflection of the infrared radiation inside the crystal as illustrated by way of a model in Fig. 8 and, therefore, is assumed to equal the thickness $d_{eff}$ which is somewhat larger than actual thickness d.

The effective thickness $d_{eff}$ can be empirically determined to be quantity proportionate to the peak height (p) of the LO + LA phonon at 738 $cm^{-1}$ in the absorbance spectrum of the sample crystal ($A_{sample}$ = log[1/$T_{sample}$]) shown in Fig. 6, for examle. Specifically, the following approximation is assumed.

$d_{eff} \fallingdotseq$ (Constant) x (peak height of LO + LA phonone) (6)

By substituting the effective thickness $d_{eff}$ and the net transmittance T due to the Oi vibration to be found as described above pertinently in the formula 5, the effective light absorption coefficient of Oi is defined as expressed by the following formula 7.

$$\alpha_{o,eff} \fallingdotseq \frac{1}{d_{eff}} \cdot \ln (1/T) \qquad (7)$$

By using this effective light absorption coefficient $\alpha_{0,eff}$ and the effective concentration conversion factor $k_{eff}$ found from the concentration calibration curve, the interstitial oxygen concentration [Oi] is evaluated as exporessed by the following formula 8:

$[Oi] \fallingdotseq k_{eff}\, \alpha_{0,eff}$ (8)

This method of determination uses the effective thickness $d_{eff}$ which can be found by the formula 6 resorting to the infrared absorption technique and obviate the neccessity for actual measurement of the actual thickness d of the sample and, therefore, permits automatic measurement without requiring any measurement of thickness. Thus, it has found extensive utility in the industry. This method, however, does not constitute itself an exact way of evaluating "Oi" because the formula 5 presumed by this method is an approximation of the formula 1 for correction of the multiple reflection. Moreover, the effect of the light absorption coefficient $\alpha_f$ due to the free carrier absorption is not exactly reflected in the approximation of the formula 5. As described afterward in the working examples, this method is defective in that it gives rise to a conspicuous error in the value of "Oi" in the case of a low-resistivity sample having a carrier concentration of 1.3 x $10^{15}$ $cm^{-3}$ or more.

SUMMARY OF THE INVENTION

Silicon single crystals of varying resistivities ( 0.5 to 20 Ω cm) were grown by varying the amount of a dopant to be supplied under conditions for producing a substantially identical interstitial oxygen concentration, polished on both the opposite surfaces to a finished thickness of 2 mm, tested for interstitial oxygen concentration and resistivity to find the relation between the interstitial oxygen concentration and the resistivity. The results are shown by the marks Δ in Fig. 1. It is clearly noted from Fig. 1 that definitely low values of evaluation of "Oi" were obtained in the region of low resistance of p type 5 Ω cm or less.

The same silicon single crystals were tested for interstitial oxygen concentration and resistivity and evaluated by the method of (2). The results were shown by the marks □ in Fig. 1. It is clearly noted from this diagram that the values of evaluation of interstitial oxygen concentration were definitely high in the low-resistivity crystals having a p type 5 Ω cm or less contrary to those evaluated by the method (1), a fact indicating that the method (2) failed to determine the values of "Oi" accurately.

Separately, a p type crystal of a resistivity of 20 Ω cm and a p type crystal of a resistivity of 0.5 Ω cm were examined by means of infrared transmission spectrum. The results are shown in Fig. 7. It is clearly noted from this diagram that the p type crystal of the lower resistivity exhibited a large absorption on the lower wave number side.

The increased absorption of the crystal of the lower resistivity exhibited on the low wave number side as shown in Fig. 7 is ascribable to the free carrier absorption. If the increased absorption of the crystal of the lower resistivity is originated solely in the absorption by the free carrier, then the accurate value of determination of "Oi" ought to have been obtained by separating the free carrier absorption by means of a base line. Actually, however, the method (1) and the method (2) are suffered to give rise to a larger error in the value of evaluation of "Oi" in the crystals of the lower resistivity as found in the results of Fig. 1.

The present inventors have continued a diligent study to find the following fact. In the low-resistivity crystal, the free carrier absorption is so strong that the effect of multiple reflection is repressed and the net absorbance [$\log(T_{base}/T_{peak})$] due to the Oi vibration is caused to approximate the level existent in the absence of multiple reflection. In contrast, in the crystal of normal resistivity exhibiting a carrier concentration of less than 1.3 x $10^{15}$ $cm^{-3}$, since the free carrier absorption decreases to a negligible degree, the effect of multiple reflection manifests strongly and the effective length of light path inside the sample increases and the absorbance due to the Oi vibration further enlarges. The intensity of the effect of multiple reflection conspicuously varies in the range of from 0.5 to 5 Ω cm in the case of the p type crystal. These results justify the conclusion that the values of evaluation of "Oi" within this range of resistivity shows heavy dependence on the resistivity as in the case of the method (1) shown in Fig. 1.

To be specific, when an infrared radiation enters a sample silicon single crystal perpendicularly to the surface thereof, it induces the phenomenon of multiple reflection as illustrated in Fig. 8. As a result, an interstitial oxygen absorption ($A_m$) due to the effect of multiple reflection which heavily depends on the degree of free carrier absorption occurs in addition to the free carrier absorption ($A_f$) and the absorption by the interstitial oxygen ($A_0$) proportionate to the thickness of the sample as illustrated in Fig. 9. In cases where the extra absorption $A_m$ caused by the increase in the effective length of light path within the sample owing to the effect of multiple reflection is existent as described above, the Lambert-Beer's law does not simply apply to the peak height of the Oi absorption.

As one mesure to cope with this problem, correct incorporation of the effect of the free carrier absorption in the correction of multiple reflection shown in the method (1) above may be conceived. As a result, the correction of the net transmittance T of Oi will be attained in accordance with the following formula 9.

$$T = F(R, d, \alpha_1, \alpha_0, \alpha_f)\, e^{-\alpha_0 d} \qquad (9)$$

In this formula, the term F(R,d, $\alpha_1$, $\alpha_0$, $\alpha_f$) stands for the value expressed by the following formula 10.

$$F(R, d, \alpha_1, \alpha_0, \alpha_f) = \frac{1 - R^2 e^{-2(\alpha_f + \alpha_1)d}}{1 - R^2 e^{-2(\alpha_0 + \alpha_f + \alpha_1)d}} \qquad (10)$$

In this formula, $\alpha_f$ stands for the coefficient of light absorption due to the free carrier absorption. The light absorption coefficient $\alpha_0$ of Oi is found from the formula 9 and the formula 10 using the values of T and $\alpha_f$ actually measured and the interstitial oxygen concentration is determined by the concentration conversion equation (Beer's law), [Oi] = $k\alpha_0$, of the formula 3. In this case, these formulas ought to apply to crystals of any resistivity in principle because the effect of $\alpha_f$ is taken into due consideration. When the correction of multiple reflection was accurately effected in accordance with the formula 9 and the formula 10 on the same samples as those of the data of Fig. 1, the results were as shown in Fig. 10. It is clearly noted from this diagram that these formulas, correct as it may be from the mathematical point of view, are incapable of correcting the variation in the effect of multiple reflection in the p type crystal of a low resistivity of 3Ω m or less because of a sharp variation of $\alpha_f$. Though the method resorting to these formulas show a discernible improvement over the method (1) and the method (2), the values of evaluation of "Oi" determined by this method with respect to the p type sample crystals having a low resistivity of 3Ω cm or less lack reliability.

As clearly noted from the description given thus far, the essence of the problem on the evaluation of "Oi" of a low-resistivity crystal arises from the presence of multiple reflection. An object of this invention, therefore, is to provide a method for the determination of an interstitial oxygen concentration by the technique of infrared absorption, which method is capable of eliminating the effect of multiple reflection and allowing accurate determination of the interstitial oxygen concentration, in a low-resistivity silicon single crystal.

BRIEF DESCRIPTION OF THE DRAWINGS

The invention will be better understood and the objects and features thereof will become apparent when consideration is given to the following detailed description thereof, which makes reference to the annexed drawings wherein;

Fig. 1 is a graph showing the relation between resistivity and value of evaluation of "Oi."

Fig. 2 is a graph showing the relation between the angles of incidence (in degrees) of the S polarized light and P polarized light and the reflectance of the infrared radiation.

Fig. 3 is an explanatory diagram illustrating the angle of incidence on the surface of a sample.

Fig. 4 is a graph showing the relative spectrum in the range of Oi absorption wavelength.

Fig. 5 is an explanatory diagram illustrating by way of a model the absorption component of the oxygen peak obtained by the method of this invention using the injection of the P polarized light at the Brewster angle.

Fig. 6 is an explanatory diagram on the effective thickness $d_{eff}$ in the evaluation of "Oi" by the method (2) with respect to the infrared absorption spectrum of a sample silicon crystal.

Fig. 7 is a spectral diagram illustrating the p type silicon single crystal of a low resistivity (0.5 Ω cm) and a p type silicon single crystal of ordinary resistivity (20 Ω cm).

Fig. 8 is an explanatory diagram illustrating the effect of multiple reflection manifested on a Si sample when the infrared radiation is injected into the sample perpendicularly to the surface of the sample.

Fig. 9 is an explanatory diagram illustrating by way of a model the absorption component of the oxygen peak in the ordinary infrared absorption spectrum of vertical incidence on a silicon single crystal.

Fig. 10 is a graph showing the relation between the value of evaluation of "Oi" and the resistivity obtained in the correction of multiple reflection inclusive of the effect of free carrier absorption.

DETAILED DESCRIPTION OF THE PREFERRED EMBODIMENTS

This invention is directed to a method for the determination of an interstitial oxygen concentration in a silicon single crystal having a carrier concentration of 1.3 x $10^{15}$ $cm^{-3}$ or more by means of the absorption in the 1106 $cm^{-1}$ infrared local vibration mode of the interstitial oxygen present in the silicon single crystal, which method is characterized by passing an infrared radiation through a polarizer thereby depriving infrared incident rays formed exclusively of a P (parallel) polarized light component and projecting the infrared incident light on the sample crystal at the Brewster angle as the angle of incidence relative to the surface of the sample crystal thereby enabling the measurement of the interstitial oxygen concentration in the silicon single crystal to be carried out under the conditions incapable of inducing multiple reflection of the infrared rays within the sample.

The method of this invention has a special significance when it is utilized for determining the interstitial oxygen concentration of a silicon single crystal having a carrier concentration of 1.3 x $10^{15}$ $cm^{-3}$ or more. Since it is still capable of effecting the determination with high accuracy even when the carrier concentration is lower than the level mentioned above, it is logically concluded that this method allows accurate determination of the interstitial oxygen concentration over a wide range from a low to a high carrier concentration.

This invention is more effective in handling a silicon single crystal of a high carrier concentration of 2.7 x $10^{15}$ $cm^{-3}$ or more.

The method of this invention permits the determination of the interstitial oxygen concentration with as high accuracy in an n type silicon single crystal as in a p type silicon single crystal.

The carrier concentration of 1.3 x $10^{15}$ $cm^{-3}$ corresponds to a resistivity of 10 Ω cm in the case of a p type silicon single crystal and to resistivity of 3.5 Ω cm in the case of an n type silicon single crystal.

The carrier concentration of 2.7 x $10^{15}$ $cm^{-3}$ corresponds to a resistivity of 5 Ω cm in the case of a p type single crystal and to a resistivity of 1.7 Ω cm in the case of an n type silicon single crystal.

In this invention, the infrared incident light which is formed solely of the P (parallel) polarized component derived by passing the infrared radiation through a polarizer is projected into a given sample crystal at the Brewster angle as the angle of incidence. The relation between the angle of incidence (in degrees) and the reflectance severally of the P polarized light and the S polarized light of the infrared radiation on the surface of the silicon single crystal is shown in Fig. 2. The angle of incidence is the angle $\theta$ shown in Fig. 3.

It is noted from Fig. 2 that the reflectance of the P polarized light reaches 0 when $\theta$ is 73.7° . The angle of incidence at which the reflectance reaches 0 is called "Brewster angle." The P polarized light projected into the sample crystal at this Brewster angle no longer induces the phenomenon of multiple reflection, with the result that the determination of "Oi" is attained accurately because the difference in the amount of Oi absorption which is caused by the difference in the degree of the effect of multiple reflection depending on the carrier concentration in the silicon single crystal ceases to exit.

The infrared incident light (having a wavelength in the range in which the absorption of the interstitial oxygen occurs in the infrared local vibration mode) which is formed solely of the P (parallel) polarized light component derived by passing the infrared radiation through a polarizer is projected into a silicon single crystal having a carrier concentration of 1.3 x $10^{15}$ $cm^{-3}$ at the Brewster angle relative to the surface of the sample crystal. Then, the infrared radiation of the P polarized light component to projected into the sample ceases to induce multiple reflection within the sample. As a result, the excess Oi absorption caused by the addition to the effective length of light path due to the effect of the multiple reflection is no longer suffered to occur. In other words, the unwanted Oi absorption by the multiple reflection is absent as shown in Fig. 5 (refer to Fig. 9 for comparison). Thus, the transmittance T of Oi can be expressed simply by the Lambert-Beer's law which is represented by the following formula 11.

$$T = e^{-\alpha_0 d'} \qquad (11)$$

(wherein d' stands for the length of light path with in the sample,

$$d' = \frac{d}{\cos(16.3^\circ)} \quad )$$

The term $\alpha_0$ is found as, $\alpha_0$ = (1/d')1n(1/T) using the value T, and the term "Oi" is calculated in according with the Beer's law, [Oi] $= k\alpha_0$.

Now, this invention will be described more specifically below with reference to working examples.

Example 1;

A plurality of silicon single crystal rods having varying resistivity in the range of from 0.5 Ω cm to 19 Ω cm were prepared by the Czochralski method using boron as a dopant and supplying the dopant in pertinently varied amounts. In this case, the conditions for pulling a silicon single crystal were so adjusted as to give an approximate oxygen concentration of 17.3 ppma to the produced silicon single crystals.

From the silicon single crystal rods consequently obtained, silicon slabs having a thickness of 2 mm and possessing surfaces of mirror finish on both sides thereof were produced by cutting as many discs from the crystal rods with diamond saw and subjecting the discs to lapping, chemical etching, washing, mirror polishing, etc.

An infrared incident light approximating 1106 $cm^{-1}$, a wave number permitting absorption of the interstitial oxygen in the infrared local vibration mode, was projected into the slabs of mirror surfaces at the Brewster angle (73.7° ) to test for reflectance by the Fourier-transform infrared spectroscopy (FT-IR) and calculate the values of evaluation of "Oi" from the Lambrt-Beer's law, formula 11 and the formula 3.

As clearly noted from Fig. 1, the method of this invention produces as reliable values of evaluation of "Oi" in sample crystals having a resistivity below 5 Ω cm as in sample crystals having a resistivity falling 5 Ω cm or more.

Comparative Experiment 1:

Silicon slabs having a thickness of 2 mm possessing polished surfaces of mirror finish on both sides thereof were produced from silicon single crystal rods having varying resistivities in the range of from 0.5 Ω cm to 19 Ω cm by following the procedure of Example 1. An infrared incident light of approximating 1106 $cm^{-1}$ was projected into the the polished surface of silicon slabs perpendicularly and, without passing a polarizer to test for reflectance and obtain values of evaluation of "Oi" by the use of an automatic infrared spectrophotometer of the method (1). The results are shown by the marks Δ in Fig. 1.

As noted from Fig. 1, this method produces rather low values of evaluation of "Oi" in samples having resistivities falling short of 5Ω cm.

Comparative Experiment 2:

Silicon slabs having a thickness of 2 mm and possessing polishing surfaces on both sides thereof were produced from silicon single crystal rods having varying resistivities in the range of from 0.5Ω cm to 19 Ω cm by following the procedure of Comparative Experiment 1. The absorbances of LO + LA phonon appearing at 738 $cm^{-1}$ in the samples were measured with an automatic infrared spectrophotometer of the method (2) mentioned above, the effective thicknesses ($d_{eff}$ ) of the samples were calculated from the formula 6 using the absorbances, and the values of evaluation of "Oi" were determined in accordance with the formula 7 and the formula 8. The results are shown by the marks □ in Fig. 1. As noted from Fig. 1, this method produces rather high values of evaluation of "Oi" in samples having resistivities falling short of 5 Ω cm.

It is plain from the description given thus far that the method of this invention allows the interstitial oxygen concentration in a silicon single crystal of a low resistivity to be determined accurately by excluding the effect of multiple reflection.

**Claims**

**1.** A method for the determination of an interstitial oxygen concentration in a silicon single crystal having a carrier concentration of 1.3 x $10^{15}$ $cm^{-3}$ or more by means of the absorption in the 1106 $cm^{-1}$ infrared local vibration mode of the interstitial oxygen present in said silicon single crystal, which method is characterized by passing an infrared radiation through a polarizer thereby depriving infrared incident rays formed exclusively of a P (parallel) polarized light component and projecting said infrared incident light on said sample crystal at the Brewster angle as the angle of incidence relative to the surface of said sample crystal thereby enabling the measurement of said interstitial oxygen concentration in said silicon single crystal to be carried out under the conditions incapable of inducing multiple reflection of the infrared rays within the sample.

**2.** A method according to claim 1, wherein said carrier concentration in said silicon single crystal is 2.7 x $10^{15}$ $cm^{-3}$ or more.

**3.** A method according to claim 1, wherein said Brewster angle is 73.3° .

FIG. 1

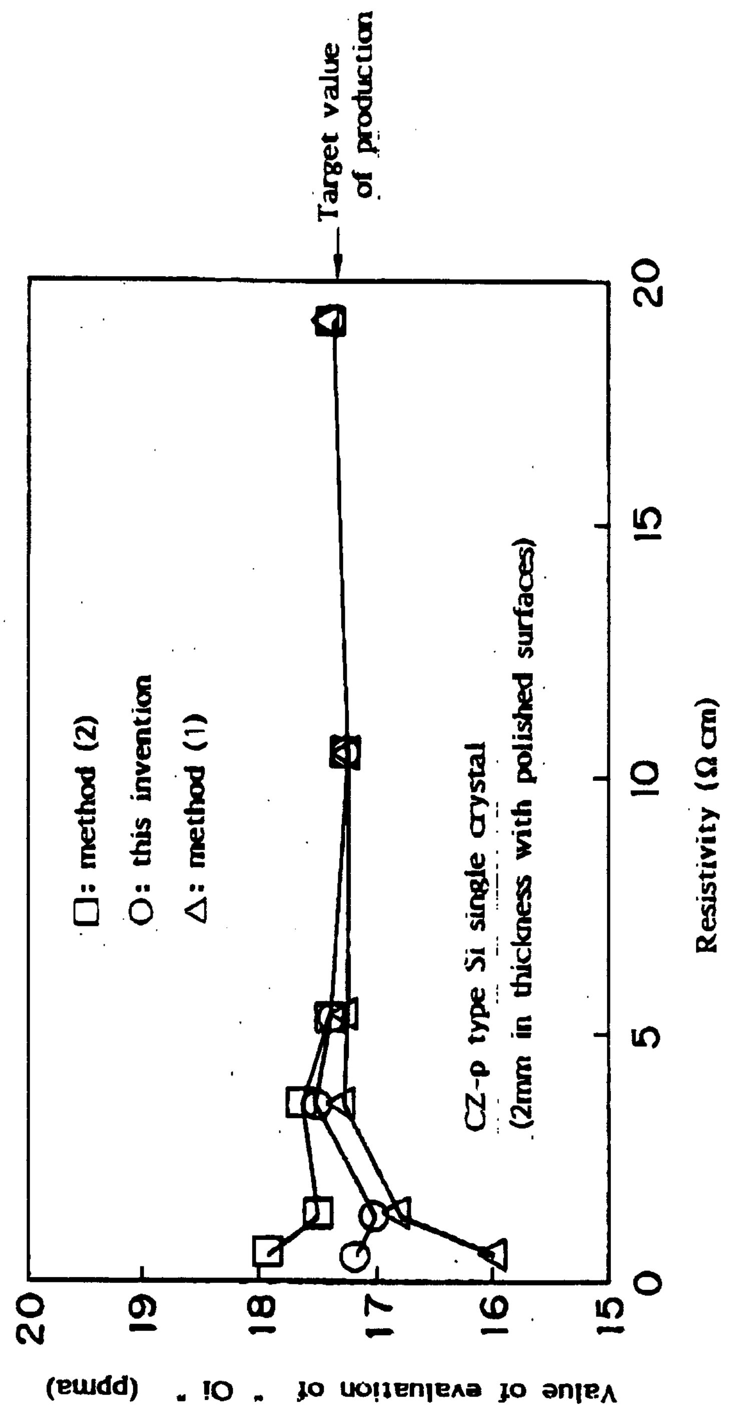

Target value of production
□: method (2)
O: this invention
Δ: method (1)
CZ-p type Si single crystal
(2mm in thickness with polished surfaces)
Resistivity (Ω cm)
Value of evaluation of " Oi " (ppma)
0
5
10
15
20
15
16
17
18
19
20

FIG. 2

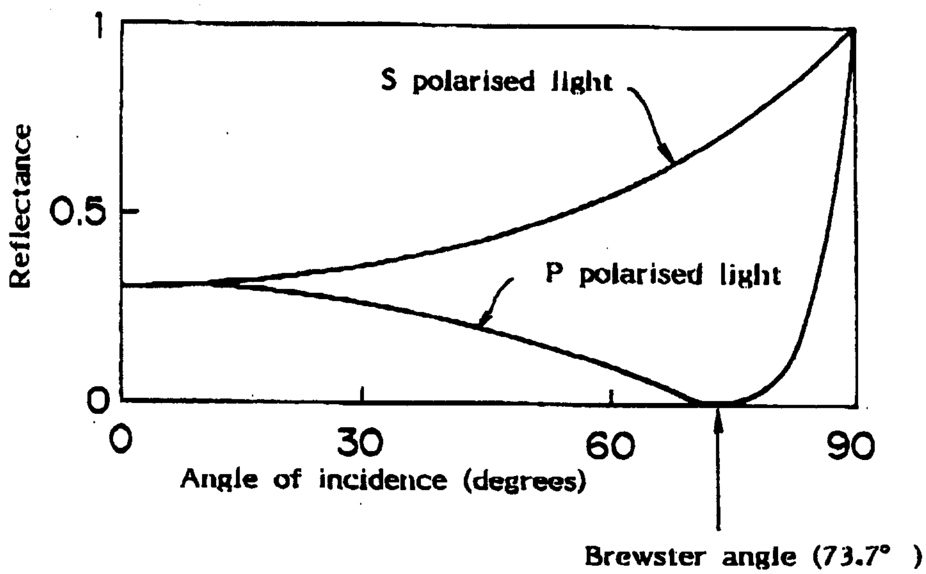
1
0.5
0
Reflectance
S polarised light
P polarised light
0
30
60
90
Angle of incidence (degrees)
Brewster angle (73.7° )

FIG. 3

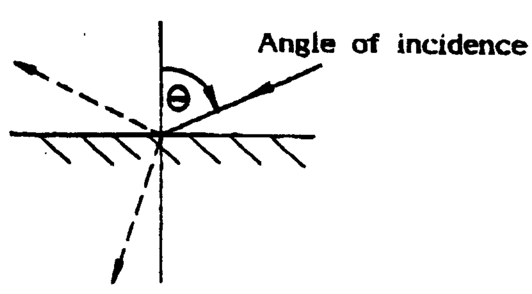
Angle of incidence
θ

FIG. 4

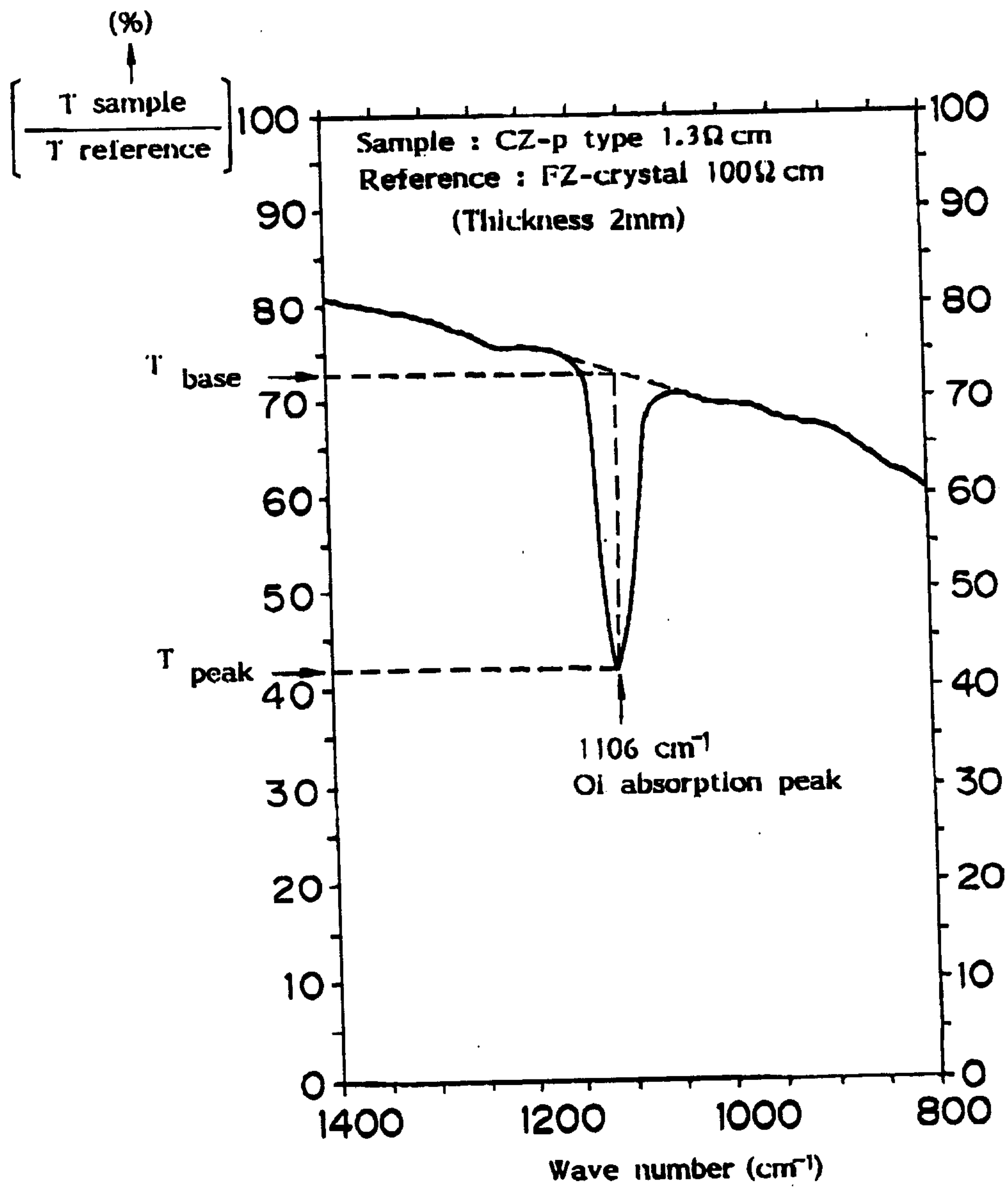
(%)
T sample / T reference
100
90
80
70
60
50
40
30
20
10
0
T base
T peak
Sample : CZ-p type 1.3Ω cm
Reference : FZ-crystal 100Ω cm
(Thickness 2mm)
1106 cm⁻¹
Oi absorption peak
1400
1200
1000
800
Wave number (cm⁻¹)

FIG. 5

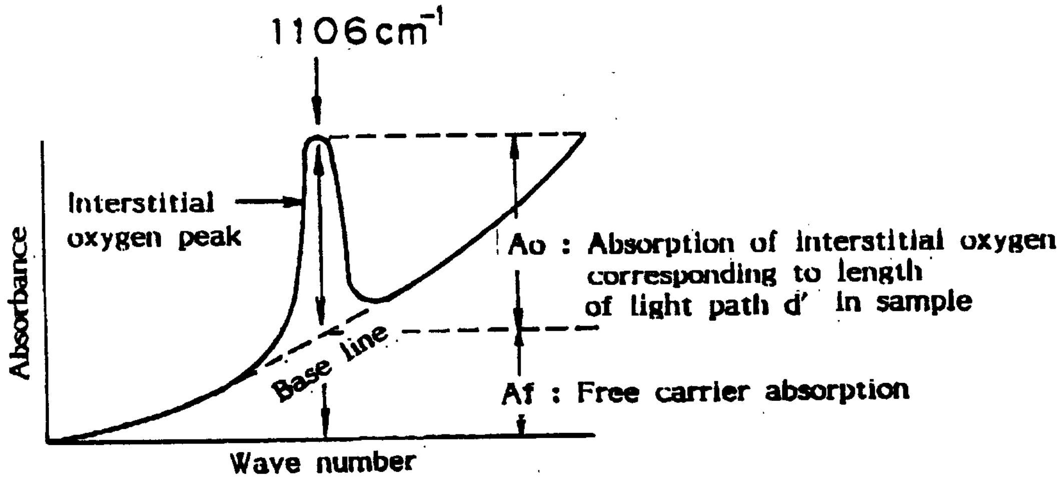
1106cm⁻¹
Interstitial oxygen peak
Absorbance
Base line
Wave number
Ao : Absorption of interstitial oxygen corresponding to length of light path d' in sample
Af : Free carrier absorption

FIG. 6

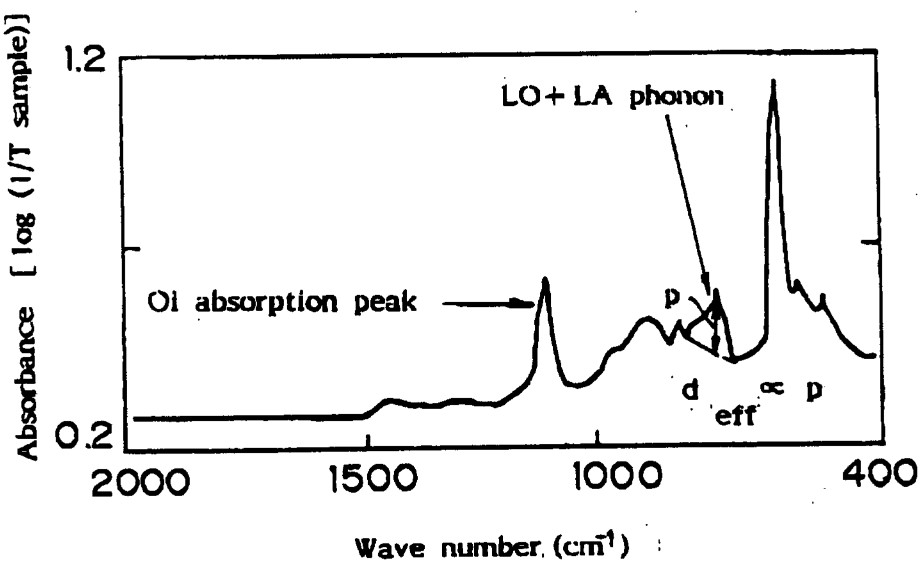
Absorbance [ log (I/T sample)]
1.2
0.2
LO+LA phonon
Oi absorption peak
p
d
eff
∝ p
2000
1500
1000
400
Wave number (cm⁻¹)

FIG. 7

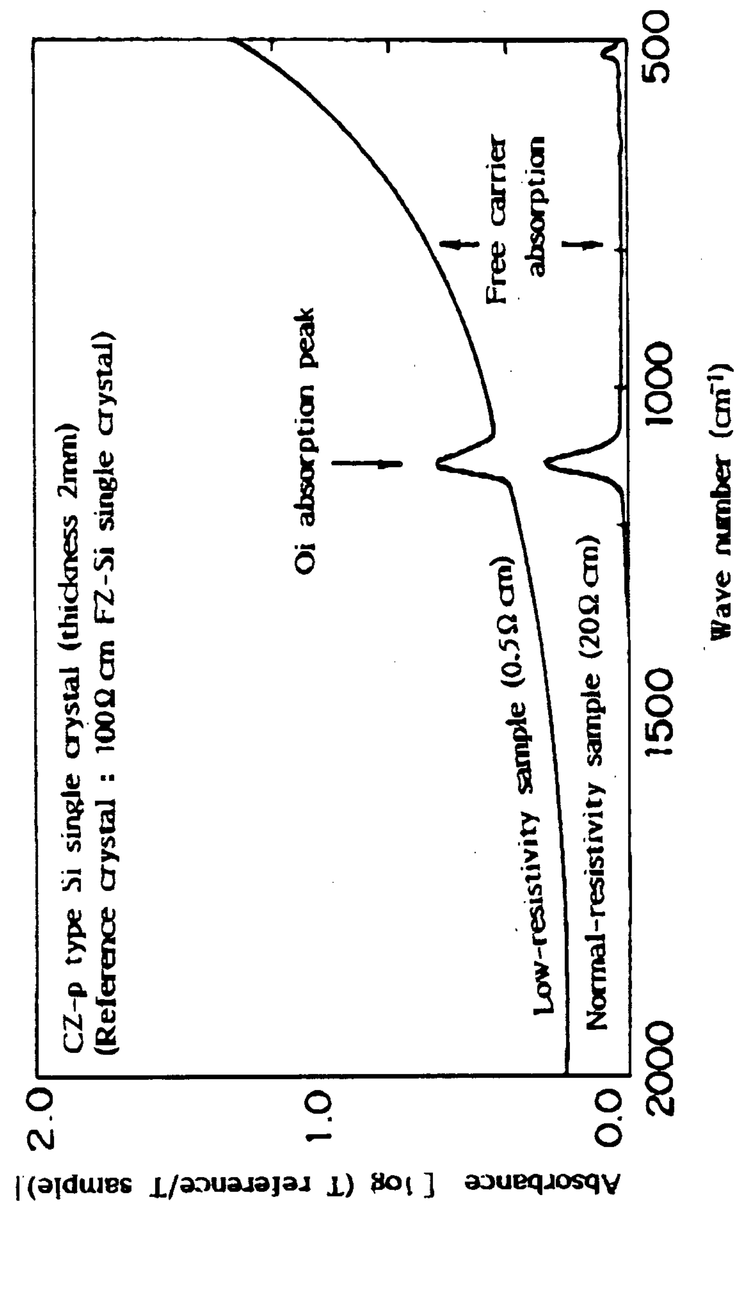
CZ-p type Si single crystal (thickness 2mm)
(Reference crystal : 100Ω cm FZ-Si single crystal)
Oi absorption peak
Free carrier absorption
Low-resistivity sample (0.5Ω cm)
Normal-resistivity sample (20Ω cm)
Absorbance [ log (T reference/T sample)]
2.0
1.0
0.0
2000
1500
1000
500
Wave number (cm-1)

FIG. 8

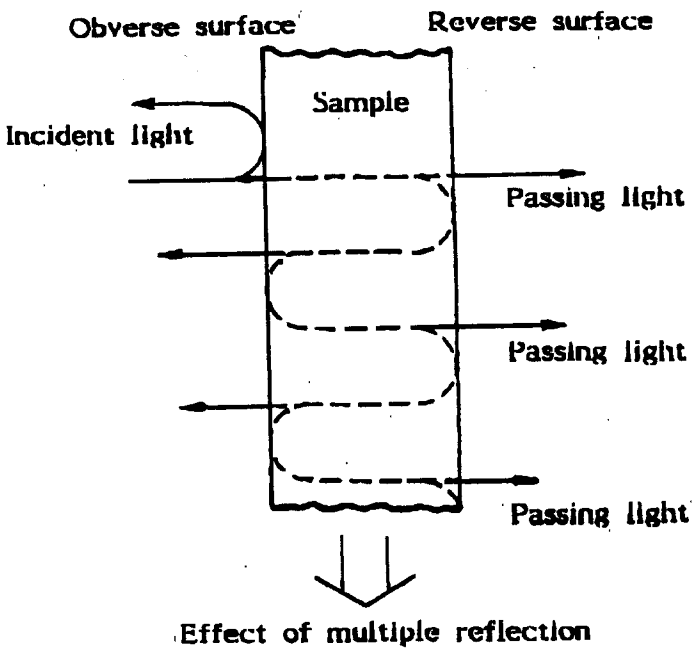
Obverse surface
Reverse surface
Sample
Incident light
Passing light
Passing light
Passing light
Effect of multiple reflection

FIG. 9

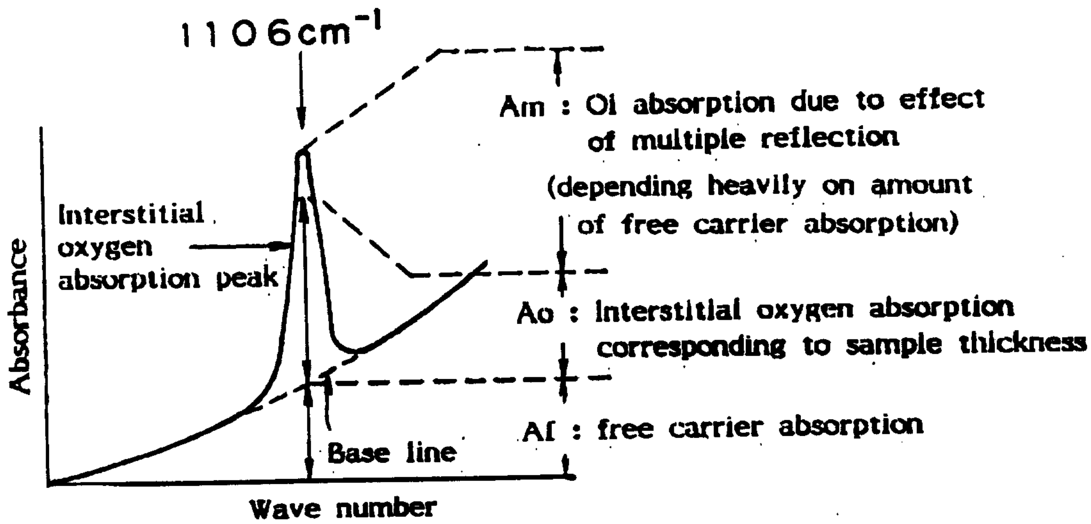
1106cm-1
Am : Oi absorption due to effect of multiple reflection
(depending heavily on amount of free carrier absorption)
Interstitial oxygen absorption peak
Absorbance
Ao : Interstitial oxygen absorption corresponding to sample thickness
Af : free carrier absorption
Base line
Wave number

FIG. 10

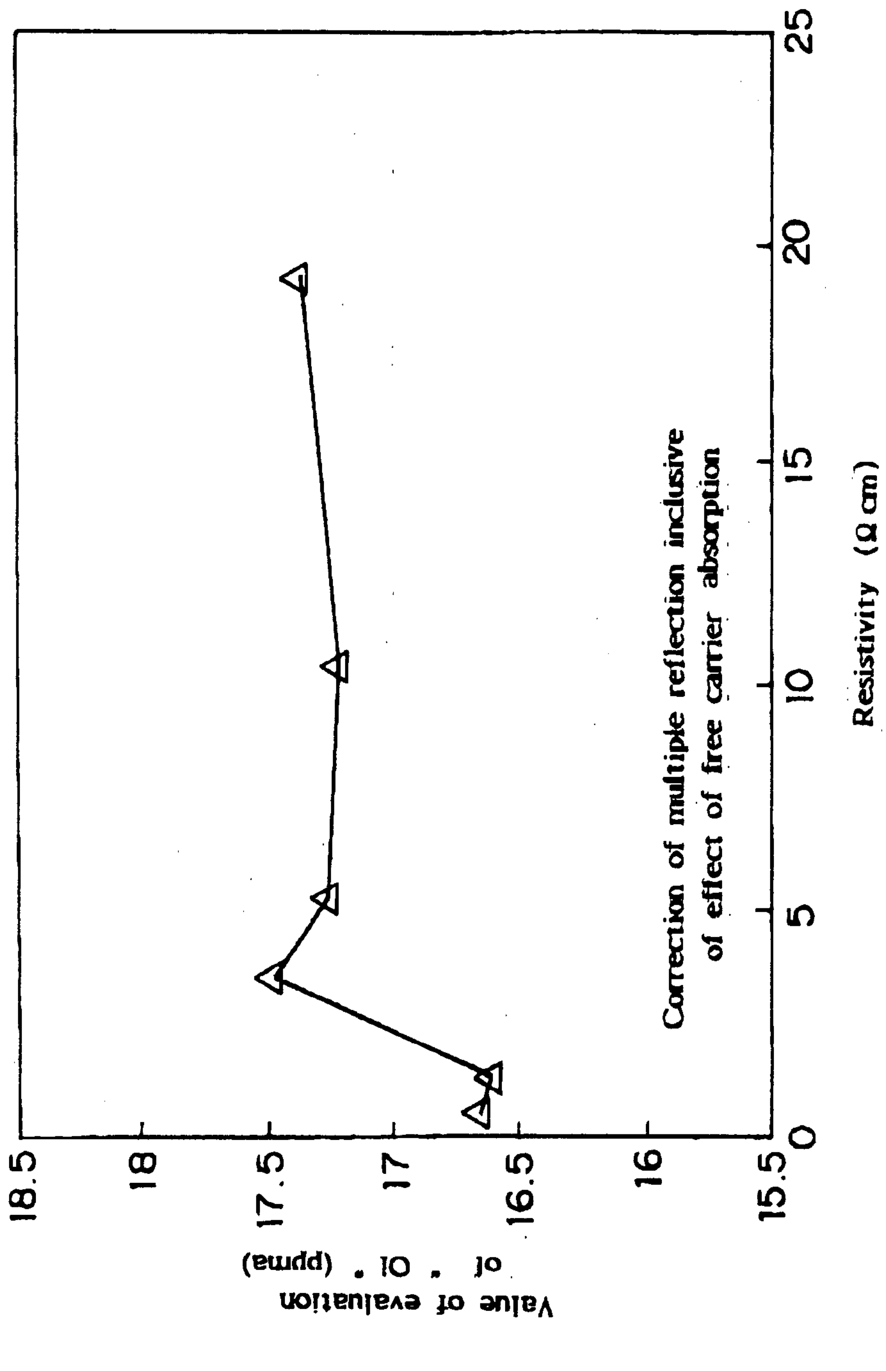

Value of evaluation of " Oi " (ppma)
18.5
18
17.5
17
16.5
16
15.5
0
5
10
15
20
25
Correction of multiple reflection inclusive of effect of free carrier absorption
Resistivity (Ω cm)

European Patent Office

# EUROPEAN SEARCH REPORT

Application Number

EP 93 30 2451
PAGE1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 469 572 (TOSHIBA CERAMICS CO. LTD.)<br>* the whole document *<br>--- | 1-3 | G01N21/35 |
| X | JOURNAL OF ELECTROCHEMICAL SOCIETY<br>vol. 138, no. 6, June 1991,<br>pages 1784 - 1787<br>H. SHIRAI 'Determination of Oxygen Concentration in Single-Side Polished Czochralski-Grown Silicon Wafers by p-Polarized Brewster Angle Incidence Infrared Spectroscopy'<br>* the whole document *<br>--- | 1-3 | |
| A | EP-A-0 410 737 (FUJITSU LTD)<br>* abstract; claim 1 *<br>--- | 1 | |
| A | IBM TECHNICAL DISCLOSURE BULLETIN<br>vol. 28, no. 3, August 1985, NEW YORK, USA<br>pages 1180 - 1181<br>ANONYMOUS 'Measurement of oxygen and carbon concentration in silicon wafers by using infrared vidicon camera'<br>* the whole document *<br>--- | 1-3 | TECHNICAL FIELDS SEARCHED (Int. Cl.5)<br>G01N |
| A | SOLID STATE TECHNOLOGY<br>vol. 30, no. 3, March 1987, PORT WASHINGTON,NY, US<br>pages 69 - 72<br>W. M. BULLIS ET AL. 'Measurement of Oxygen in Silicon'<br>* the whole document *<br>---<br>-/-- | 1 | |

The present search report has been drawn up for all claims

| Place of search | Date of completion of the search | Examiner |
|---|---|---|
| BERLIN | 30 JULY 1993 | BRISON O.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application Number

EP 93 30 2451
PAGE2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | SOLID STATE TECHNOLOGY<br>vol. 26, no. 8, August 1983, PORT WASHINGTON,NY, US<br>pages 233 - 237<br>P. STALLHOFER ET AL. 'Oxygen and Carbon Measurements on Silicon Slices by the IR Method'<br>* the whole document *<br>----- | 1 | |

TECHNICAL FIELDS SEARCHED (Int. Cl.5 )

The present search report has been drawn up for all claims

| Place of search | Date of completion of the search | Examiner |
|---|---|---|
| BERLIN | 30 JULY 1993 | BRISON O.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document